Europäisches Patentamt

European Patent Office

Office européen des brevets

(19)

(11) Veröffentlichungsnummer: **0 275 874 B1**

(12) **EUROPÄISCHE PATENTSCHRIFT**

(45) Veröffentlichungstag der Patentschrift: 03.07.91

(51) Int. Cl.⁵: **B25J 5/00**

(21) Anmeldenummer: 88100094.7

(22) Anmeldetag: 07.01.88

(54) Rettungsfahrzeug zum Einsatz in strahlenverseuchten Räumen.

(30) Priorität: 14.01.87 DE 3700814

(43) Veröffentlichungstag der Anmeldung:
27.07.88 Patentblatt 88/30

(45) Bekanntmachung des Hinweises auf die
Patenterteilung:
03.07.91 Patentblatt 91/27

(84) Benannte Vertragsstaaten:
AT BE CH DE ES FR GB GR IT LI LU NL SE

(56) Entgegenhaltungen:
FR-A- 2 190 087
GB-A- 980 044
GB-A- 2 041 879

PROCEEDINGS OF THE 14th CONFERENCE
ON REMOTE SYSTEMS TECHNOLOGY, Pittsburgh, Oktober-November 1966, Seiten
129-137; G.B. HOMER: "Mobile manipulator
systems"

THE ENGINEER, Band 217, Nr. 5639, 21. Februar 1964, Seite 366, Morgan-Grampian Ltd,
London, GB; "Mobile manipulator for radioactive environments"

PRODUCT ENGINEERING, 28. September

1959, Seite 26, Morgan-Grampian Publishing
Corp., New York, US; "Machine does man's
job in reactor"

KERNTECHNIK, Band 17, Nr. 12, Dezember
1975, Seiten 527-532, Verlag Karl Thiemig,
München, DE; G.W. KÖHLER et al.:
"Manipulatorfahrzeug-System MF 2 und seine Verwendungsmöglichkeiten"

(73) Patentinhaber: NTG Neue Technologien GmbH
& Co. KG
Im Steinigen Graben 12-14
W-6460 Gelnhausen-Hailer(DE)

(72) Erfinder: Ortmayer, Rudolf M., Ing. -grad.
Dr.Faust-Strasse 5
W-6460 Gelnhausen 1(DE)
Erfinder: Pick, Werner
Ostring 7
W-6483 Bad Soden-Salmünster(DE)

(74) Vertreter: Munderich, Paul, Dipl.-Ing.
Frankfurter Strasse 84
W-6466 Gründau-Rothenbergen(DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Rettungsfahrzeug gemäß dem Oberbegriff des Hauptanspruches.

Ein solches Rettungsfahrzeug ist aus dem Dokument Proceedings of the 14th Conference of remote systems technology, Seiten 129 bis 137 bekannt.
Ein Rettungsfahrzeug mit den Merkmalen des Kennzeichens des Hauptanspruches durch diese Druckschrift wird weder vorbeschrieben noch nahegelegt.

Insbesondere seit der Tschernobyl-Katastrophe wird nach einer Lösung für die Probleme solcher Rettungsfahrzeuge gesucht.
Sie wurden auch im Rahmen internationaler Diskussionen erörtert.

Die Erfindung schafft ein funktionsfähiges Rettungsfahrzeug, das für eine Vielfalt denkbarer Störfälle einsatzfähig ist.

Die erfindungsgemäße Lösung sieht vor, daß das Rettungsfahrzeug auf eine Strahlungsbeständigkeit bis $10^6$ rad $Co^{60}$ ausgelegt ist, und an Aufhängeösen in der Regel durch eine Krananlage auf die gewünschte Arbeitshöhe einfahrbar ist, der Antrieb des Rettungsfahrzeuges durch DC-Motore erfolgt, der Antrieb des Turmes und des Auslegers durch ein durch DC-Motor angetriebenes Hydraulikaggregat erfolgt,
der Antrieb der Faßzange durch das Hydraulikaggregat erfolgt, der Antrieb des Manipulators durch DC-Motore erfolgt, wobei Einzelantriebe für folgende Funktionen vorgesehen sind:

    a) Zange auf eine in axialer Erstreckung des Manipulators über ein vorbestimmbares, innerhalb eines Wahlbereiches liegendes Maß, ausfahren,

    b) Zange greift,

    c) Zange drehen,

    d) Handgelenk schwenken

    e) Ellbogengelenk schwenken, und

    f) Schultergelenk schwenken,

und das mit Pultplatte versehene Steuerpult mit Hauptschalter, Kontrolleuchten, Empfänger (Kopfhörer),einem Lautstärkeregler für den Empfänger, Ladekontrollampen für die Anzeige der Ladung der Batterie, einem Schalter zur Ermöglichung der Entnahme der Werkzeuge, Monitoren mit zugeordneten Joystics und Schaubildern des Manipulators bzw. des Rettungsfahrzeuges, einschließlich des drehbaren Turmes und des Auslegers mit Wahlkopfschalter für die möglichen Bewegungen und Funktionen ausgerüstet ist, wobei in der Pultplatte die jedem Monitor zugeordneten Funktionen in separaten Steuer- und Schaltgruppen auch optisch zusammengefaßt sind.

Wie vorher festgestellt, sind für den Antrieb und die Steuerung neben den DC-Motoren auch Verbindungen zwischen DC-Motor und einem Hydraulikaggregat vorgesehen, wobei insbesondere der Manipulator und die ihm zuordnungsbaren Werkzeuge ausschließlich durch DC-Motore gesteuert werden, während der Antrieb des Turmes und des Auslegers sowie der Faßzange elektrohydraulisch erfolgt.

In einer speziellen Ausführungsform der Erfindung ist für die Andockung des Rettungsfahrzeuges an ein mobiles Gerät vorgesehen, daß die Kupplung mit ihrem am Rettungsfahrzeug angeordneten Kupplungsteil in eine Verbindungslage zum korrespondierenden zweiten Kupplungsteil am mobilen Gerät einsteuerbar ist.

Die Steuerung des Manipulators kann, ausgehend von dem Endstück am Ausleger, über drei weitere, am Endstück angelenkte, in Reihenfolge ihrer Aufzählung umd $250°$, $260°$ und $310°$ verschwenbare Glieder erfolgen, die ihrerseits mit dem Manipulatorkopf verbunden sind.

Die stufenweise Vergrößerung des Schwenkwinkels ermöglicht die Verbringung und den Ansatz praktisch in jede denkbare Lage.

Des weiteren ist vorgesehen, daß jede Batterie bzw. jede einzelne elektrisch verbundene Batterie-Gruppe einem separaten Stromkreis angeschlossen sein kann,
so daß ein Gesamtausfall der Spannung innerhalb des verstrahlten Raumes nicht denkbar erscheint.

Abschließend ist zu bemerken, daß das Rettungsfahrzeug ein Gleiskettenfahrzeug besitzt, dessen Ketten mit Gummi belegt sind.
Die Geschwindigkeit des Fahrzeuges beträgt max. 40 m/min. und kann auf drei verschiedenen Fluren eingesetzt werden (-6m, ± 0 m, + 6 m).
Es wird eine relativ ebene, durch Exponiat-Anstrich abgedeckte Oberfläche mit maximalen Bodenunebenheiten von ± 3 mm vorausgesetzt.

Die ausgewiesene Lösung wird der Aufgabenstellung in vollem Umfang gerecht.

Das erfindungsgemäße Rettungsfahrzeug wird durch die Darstellung einer beispielsweisen Ausführungsform näher erläutert.

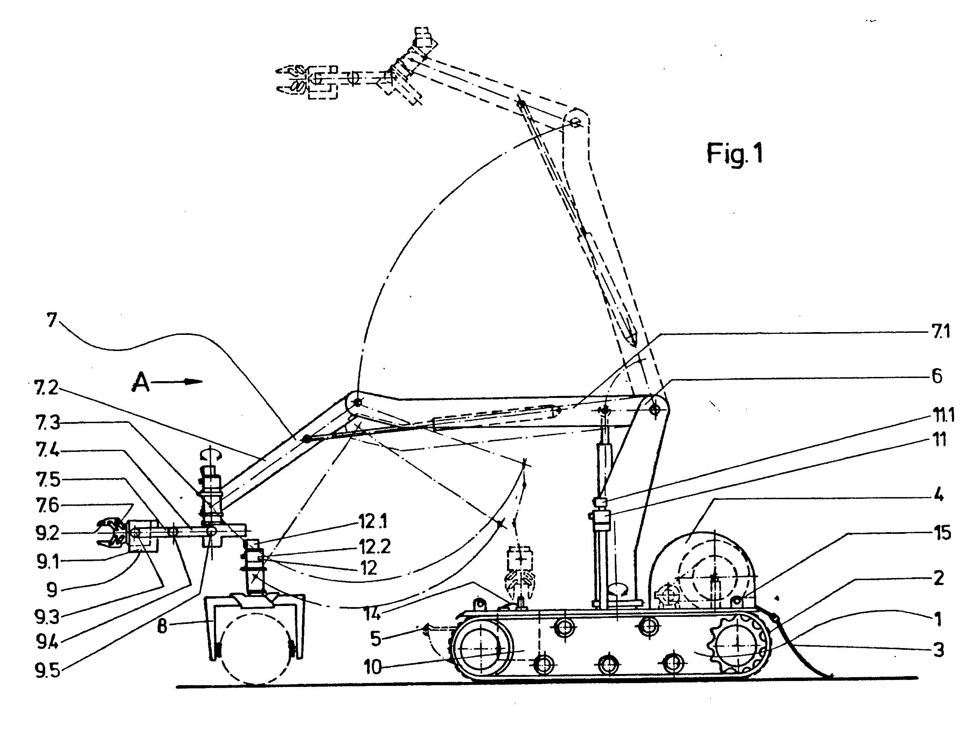

Figur 1 zeigt     den Seitenriß des Rettungsfahrzeuges mit seinen Aufbauten, insbesondere den durch einen Drehturm getragenen Ausleger, die Faßzange und den Manipulator in Transport- und Arbeitsstellung, die automatische Kabeltrommel sowie das Kupplungsteil zum Andocken an das mobile Gerät.

Figur 2 zeigt     die Ansicht aus Figur 1 und damit die veränderliche Lage des automatisch sich einstellenden Kupplungsteiles zum

Figur 3 zeigt      Andocken an das zu bergende mobile Gerät, z.B. an einen Gabelstapler. [Pfeilrichtung A]

Figur 3 zeigt      das mobile Steuerpult für die Steuerung des Rettungsfahrzeuges von außerhalb des verstrahlten Raumes.

Figur 4 zeigt      die Ansicht von Figur 3 aus Richtung B, d.h. die Steuerpultplatte, die mit Hauptschalter, Kontrolleuchten, einem Empfänger (Kopfhörer), Monitoren, Joystic (Steuerknüppel) und Schaubildern des Rettungsfahrzeuges und des Manipulators mit im Schaubild angeordneten Wahlknopfschaltern für die Freigabe der möglichen Bewegungen und Funktionen ausgerüstet ist, wobei die jedem Monitor zugeordneten Funktionsschaltungen in separaten Gruppen zusammengefaßt sind.

Das Rettungsfahrzeug 1 ist hinsichtlich seiner Materialauswahl auf eine Strahlungsbeständigkeit bis zu $10^6$ rad $Co^{60}$ ausgelegt.

Über ein elektrisches Sammelkabel 3, das getrennt den Einzelanschlüssen eines Steuerpultes 16 verbunden ist, und das andernends der auf dem Rettungsfahrzeug 1 montierten automatischen Kabeltrommel 4 angeschlossen ist, ist die elektrische Verbindung hergestellt. Der Kabellauf, d.h. die Ab- bzw. Rückwicklung erfolgt automatisch synchron zur Fahrgeschwindigkeit des Rettungsfahrzeuges 1.

An dem Rettungsfahrzeug 1 ist stirnseitig ein Kupplungsteil 5 angeordnet, das die selbständige Andockung des mobilen, zu entfernenden oder zu reparierenden Gerätes ermöglicht bzw. vollzieht.

Das Rettungsfahrzeug 1 ist mit einem, etwa in dessen Schwerpunktlage um 220° verschwenkbaren Turm 6 versehen, der seinerseits die Verstellagerung für den aus den Auslegergliedern 7.1 und 7.2 sowie dem begrenzenden Endteil 7.3 bestehenden Ausleger 7 ist. Durch das schwenkbar angeordnete Endteil 7.3 können die Faßzange 8 oder der Manipulator 9 mit der Werkzeugzange 9.2 für die Bestückung mit Werkzeugen 14 aufgenommen werden.

Der Ausleger 7 ist durch zwei Hydraulikzylinder in Verbindung mit dem um 220° drehbaren Turm 6 über einen weiten Bereich in jede beliebige Endposition stufenlos verbringbar, so daß das Aufrichten von Fässern oder die Aufnahme anderer Teile aus einem weiten Bereich möglich ist.

Zu dem elektro-pneumatischen Antrieb darf festgehalten werden, daß das Rettungsfahrzeug 1 mit einem Ladegerät 10 für die Batterien bzw. die verbundenen Batterie-Gruppen 10.1 ausgerüstet ist und ein angeschlossener DC-Motor das Hydraulikaggregat 13 antreibt. (Eventuell auch mehrere Ladegeräte 10). Die eigentliche Steuerung des Manipulators 9 erfolgt, ausgehend von dem Endstück 7.3 über drei weitere, am Endstück 7.3 angelenkte, in Reihenfolge ihrer Aufzählung um 250°, 260° und 310° verschwenkbare Glieder 7.4, 7.5 und 7.6, die ihrerseits mit dem Manipulatorkopf 9.1 verbunden sind,

der axial verschiebbar, drehbar und auf verschiedene Schlüsselweiten einstellbar ist . Es sind insgesamt sechs DC-Motore für die Verbringung in die genannten Einstellungen, wobei die Schlüsselweite der Zange 9.2, im Falle dieses Beispieles, auf max. 127mm einstellbar ist, vorgesehen.

Es ist möglich

     a) die Werkzeugzange 9.2 bis zu 100 mm auszufahren,

     b) diese zu drehen,

     c) deren Schlüsselweite einzustellen,

     d) das Handgelenk 9.3 zu verschwenken,

     e) das Ellbogengelenk 9.4 zu verschwenken und

     f) das dem Endstück 7.3 verbundene Schultergelenk 9.5 zu verschwenken.

Die Schwenkbereiche werden, ausgehend vom Schultergelenk 9.5 bis zum Handgelenk 9.3, in Stufen größer.

Abschließend ist zu dem mit Pultplatte 16.1 versehenen Steuerpult 16 zu bemerken, daß dieses mit Hauptschalter 20, Kontrolleuchten 21, Empfänger 22 (Kopfhörer), einem Lautstärkeregler 23 für den 22, Ladekontrollampen 24 für die Anzeige der Ladung der Batterien, einem Schalter 25 zur Ermöglichung der Entnahme der Werzeuge 14, Monitoren 26 und 27 mit zugeordneten Joystics 28 und 29 (Steuerknüppel) und Schaubildern 30 und 31 des Manipulators 9 bzw. des Fahrzeuges 1,

einschließlich des drehbaren Turmes 6 und des Auslegers 7 mit Wahlknopfschalter für die möglichen Bewegungen und Funktionen ausgerüstet ist, wobei in der Pultplatte 16.1 die jedem Monitor 26 und 27 zugeordneten Funktionen in separaten Steuer- und Schaltgruppen 30 und 31 zusammengefaßt sind.

**Ansprüche**

1. Rettungsfahrzeug zur über elektrische Sammelkabel ferngesteuerten Rettung von Menschen, Räumung von Bau- oder sonstigem Müll und/oder Reparaturen aus bzw. in verstrahlten Räumen unbemannter oder sonstiger stationärer oder mobiler Geräte, wobei das Rettungsfahrzeug mit weiteren Vorrichtungen, wie Manipulator und Faßzange, zur Aufnahme und Handhabung von Werkzeugen und zur Aufnahme von Fässern und Gebinden mit einlagernden, in der Regel ionisiert strahlenden Abfällen ausgerüstet ist, sowie Ladegeräte für mehrzahlig vorhandene Batterien oder Batterie-Gruppen-Einheiten und einem Kupplungsteil zur Verbindung mit einem am mobilen Gerät angeordneten, korrespondierenden zweiten Kupplungsteil vorgesehen ist, wobei die Werkzeuge und die Faßzange einem auf dem Rettungsfahrzeug installierten Ausleger zuordnungsbar sind, wobei das Rettungsfahrzeug über das Sammelkabel einem außerhalb des verstrahlten Raumes angeordneten Steuerpult elektrisch verbunden ist, das Steuerpult den Anschluß des entsprechenden Batterienetzes und die Aufnahme der Mittel zur vollständigen externen Steuerung und Kontrolle des Rettungsfahrzeuges einschließlich aller fest zugeordneten bzw. zuordnungsbaren Teile vorsieht, und der Kabellauf, d.h. die Ab- bzw. Rückwicklung des Sammelkabels, ausgehend von einer mit dem Rettungsfahrzeug verbundenen Kabeltrommel, automatisch synchron zur Fahrgeschwindigkeit des Rettungsfahrzeuges erfolgt, dadurch gekennzeichnet,

daß das Rettungsfahrzeug (1) auf eine Strahlungsbeständigkeit bis $10^6$ rad Co $^{60}$ ausgelegt ist, und an Aufhängeösen (15) in der Regel durch eine Krananlage auf die gewünschte Arbeitshöhe einfahrbar ist, der Antrieb des Rettungsfahrzeuges (1) durch DC-Motore erfolgt, der Antrieb des Turmes (6) und des Auslegers (7) durch ein durch DC-Motor angetriebenes Hydraulikaggregat (13) erfolgt, der Antrieb für die Faßzange (8) durch das Hydraulikaggregat (13) erfolgt, der Antrieb des Manipulators (9) durch DC-Motore erfolgt, wobei die Einzelantriebe für folgende Funktionen vorgesehen sind:

a) Zange (9.2) auf eine in axialer Erstreckung des Manipulators (9) über ein vorbestimmbares, innerhalb eins Wahlbereiches liegendes Maß, ausfahren,
b) Zange (9.2) greift,
c) Zange (9.2) drehen,
d) Handgelenk (9.3) schwenken,
e) Ellbogengelenk (9.4) schwenken und
f) Schultergelenk (9.5) schwenken,
und das mit Pultplatte (16.1) versehene Steuerpult (16) mit Hauptschalter (20), Kontrolleuchten (21), Empfänger (22) (Kopfhörer), einem Lautstärkeregler (23) für den Empfänger (22), Ladekontrollampen (24) für die Anzeige der Ladung der Batterie (10.1), einem Schalter (25) zur Ermöglichung der Entnahme der Werkzeuge (14), Monitoren (26 und 27) mit zugeordneten Joystics (28 und 29) und Schaubildern (30 und 31) des Manipulators (9) bzw. des Rettungsfahrzeuges (1), einschließlich des drehbaren Turmes (6) und des Auslegers (7) mit Wahlknopfschalter für die möglichen Bewegungen und Funktionen ausgerüstet ist, wobei in der Pultplatte (16.1) die jedem Monitor (26 und 27) zugeordneten Funktionen in separaten Steuer- und Schaltgruppen (30 und 31) zusammengefaßt sind.

2. Rettungsfahrzeug nach Anspruch 1, dadurch gekennzeichnet,

daß die für die Verbindung zwischen Rettungsfahrzeug (1) und dem mobilen Gerät vorgesehene Kupplung mit ihrem am Rettungsfahrzeug (1) angeordneten Kupplungsteil (5) in eine Verbindungslage zum korrespondierenden zweiten Kupplungsteil am mobilen Gerät einsteuerbar ist.

3. Rettungsfahrzeug nach Anspruch 1, dadurch gekennzeichnet,

daß die Steuerung des Manipulators (9), ausgehend von dem Endstück (7.3) über drei weitere, am Endstück (7.3) angelenkte, in Reihenfolge ihrer Aufzählung um 250°, 260° und 310° verschwenkbare Glieder (7.4, 7.5 und 7.6), die ihrerseits mit dem Manipulatorkopf (9.1.) verbunden sind, erfolgt.

4. Rettungsfahrzeug nach Anspruch 1, dadurch gekennzeichnet,

daß jede Batterie bzw. jede einzelne elektrisch verbundene Batterie-Gruppe einem separaten Stromkreis angeschlossen ist.

**Claims**

1. A rescue vehicle for the remote-controlled rescue, through electrical ring cables, of human beings, for clearing of building rubbish and other refuse from and/or repair work in spaces contaminated by radioactivity, of crewless or other stationary or mobile devices, with the rescue vehicle being furnished with additional means, such as manipulator or barrel tongs for taking up and handling of tools and for taking up of barrels and casks containing usually ionizing and radioactive waste, and being furnished with charging devices for a plural number of batteries or battery-group units, and a coupling portion for connection to a corresponding second coupling portion located on a mobile device, wherein the tools and the barrel tongs can be associated to a boom installed on the rescue vehicle, with the rescue vehicle, through the ring cable, being electrically connected to a control desk disposed externally of the radioactive space, and wherein the control desk provides for the connection of the corresponding battery network and for the reception of the means for the complete external steering and control of the rescue vehicle, all associated or associable parts included, and wherein the course of the cable - starting from a cable drum connected to the rescue vehicle - automatically is in synchronism with the speed of the rescue vehicle, characterized in that the rescue vehicle (1) is designed for a radioactivity resistance of up to $10^6$ rad Co$^{60}$ and, on suspension ears (15), as a rule, through a crane assembly, is retractable to the desired work level, that the drive of the rescue vehicle (1) can be effected through DC-engines, that the drive of the tower (6) and of the boom (7) is effected through a DC-engine-driven hydraulic assembly (13), that the drive for the barrel tongs (8) is effected through the hydraulic assembly (13), that the drive of the manipulator (9) is effected through DC-engines, with the individual drives being provided for the following functions:

     a) retracting of tongs (9.2) to a predetermined amount in the axial direction of the manipulator (9) and lying within a selected range,
     b) gripping of tongs (9.2)
     c) turning of tongs (9.2)
     d) swivelling of wrist (9.3)
     e) swivelling of elbow joint (9.4), and
     f) swivelling of shoulder joint (9.5),
and that the control desk (16) provided with desk plate (16.1) is furnished with master switch (20), control lamps (21), receiver (22) (headphones), a sound volume control (23) for the receiver (22), charge control lamps (24) for the display of the charge of the battery (10.1), a switch (25) for enabling discharge of the tools (14), monitores (26 and 27) including associated joysticks (28 and 29) and diagrams (30 and 31) of the manipulator (9) and of the rescue vehicle (1) respectively, inclusive of the rotatable tower (6) and of the boom (7) with a selective button switch for all permitted movements and functions, with the functions associated to each monitor (26 and 27), in the desk plate (16.1), being combined in separate control and switch groups (30 and 31).

2. A rescue vehicle according to claim 1, characterized in
that the coupling provided for the connection between the rescue vehicle (1) and the mobile device, with its coupling part (5) arranged on the rescue vehicle (1), can be placed into a position of connection relative to the corresponding second coupling part on the mobile device.

3. A rescue vehicle according to claim 1, characterized in
that the control of the manipulator (9) - starting from the end portion (7.3) - is effected through three additional members (7.4, 7.5 and 7.6) pivoted to the end portion (7.3) and swivelled in the order of their numbering by 250°; 260° and 310°, which, in turn, are connected to the manipulator head (9.1).

4. A rescue vehicle according to claim 1, characterized in
that each battery and each individual electrically connected battery group, respeotively, is connected to a separate circuit.

## Revendications

1. Véhicule de sauvetage pour le sauvetage de personnes télécommandé par l'intermédiaire de câbles collecteurs électriques, pour le déblaiement de décombres ou d'autres déchets, et/ou pour des réparations respectivement effectuées à partir ou à l'intérieur de locaux irradiés d'installations inoccupées ou autres installations fixes ou mobiles ; le véhicule de sauvetage étant muni d'autres dispositifs, tels qu'un manipulateur et une pince de préhension, en vue de la réception et de la manipulation d'outils et en vue du prélèvement de citernes et fûts métalliques renfermant des déchets stockés libérant, en général, des rayonnements ionisants, ainsi que d'appareils de chargement pour de multiples batteries ou groupes de batteries unitaires, et d'une partie d'accouplement en vue de la solidarisation avec une seconde partie d'accouplement correspondante, disposée sur l'installation mobile ; véhicule dans lequel les outils et la pince de préhension peuvent être associés à une flèche en porte-à-faux installée sur ce véhicule de sauvetage, ledit véhicule de sauvetage est raccordé électriquement, par l'intermédiaire du câble collecteur, à un pupitre de commande situé à l'extérieur du local irradié, le pupitre de commande assure la connexion du réseau de batteries correspondant et la réception des moyens destinés à la commande et au contrôle extérieurs intégraux du véhicule de sauvetage, y compris toutes les parties respectivement assujetties ou assujettissables, et le défilement du câble, c'est-à-dire te dévidage ou te renvidage du câble collecteur, à partir d'un tambour à câble relié au véhicule de sauvetage, a lieu automatiquement en synchronisme avec la vitesse de déplacement dudit véhicule de sauvetage, caractérisé par le fait que le véhicule de sauvetage (1) est conçu pour une résistance aux rayonnements atteignant jusqu'à $10^6$ rad $Co^{60}$, et peut être amené à la hauteur de travail souhaitée, sur des oeillets de suspension (15), en général par l'intermédiaire d'une installation de levage par grue ; l'entraînement du véhicule de sauvetage (1) a lieu par l'intermédiaire de moteurs à courant continu ; l'entraînement de la tour (6) et de la flèche en porte-à-faux (7) a lieu par l'intermédiaire d'un groupe hydraulique (13) entraîné par un moteur à courant continu ; l'entraînement de la pince de préhension (8) a lieu par l'intermédiaire du groupe hydraulique (13) ; l'entraînement du manipulateur (9) a lieu par l'intermédiaire de moteurs à courant continu ; les entraînements individuels étant prévus pour les fonctions suivantes :

a) sortie de la pince (9.2) sur l'étendue axiale du manipulateur (9), d'une distance pouvant être prédéterminée et située dans les limites d'une plage de sélection,

b) saisie par la pince (9.2),

c) rotation de la pince (9.2),

d) pivotement de l'articulation manuelle (9.3),

e) pivotement de l'articulation cubitale (9.4) et

f) pivotement de l'articulation scapulaire (9.5),

et le pupitre de commande (16), pourvu d'un panneau (16.1) de pupitre, est équipé d'un commutateur principal (20), de témoins lumineux (21), d'un récepteur (22) (écouteur serre-tête), d'un régulateur (23) d'intensité sonore du récepteur (22), de témoins lumineux de charge (24), pour l'affichage de la charge de la batterie (10.1), d'un interrupteur (25) pour permettre la dépose des outils (14), d'écrans de contrôle (26 et 27), associés à des commutateurs à tiges (28 et 29) et à des organigrammes respectifs (30 et 31) du manipulateur (9) et du véhicule de sauvetage (1), y compris la tour rotative (6) et la flèche en porte-à-faux (7), ainsi que d'un bouton sélecteur des mouvements et fonctions possibles, les fonctions associées à chaque écran de contrôle (26 et 27) étant rassemblées, dans le panneau (16.1) du pupitre, en des groupes distincts de commande et de commutation (30 et 31).

2. Véhicule de sauvetage selon la revendication 1, caractérisé par le fait

que l'accouplement, prévu pour la solidarisation entre le véhicule de sauvetage (1) et l'installation mobile, peut être amené par commande, par sa partie d'accouplement (5) disposée sur le véhicule de sauvetage (1), à une position de solidarisation par rapport à la seconde partie d'accouplement correspondante, située sur l'installation mobile.

3. Véhicule de sauvetage selon la revendication 1, caractérisé par le fait

que la commande du manipulateur (9), à partir de l'embout d'extrémité (7.3), est assurée par l'intermédiaire de trois autres organes (7.4, 7.5 et 7.6) qui sont articulés sur l'embout d'extrémité (7.3), peuvent pivoter de 250°, 260° et 310° dans l'ordre successif de leur énumération, et sont à leur tour reliés à la tête (9.1) du manipulateur.

4. Véhicule de sauvetage selon la revendication 1, caractérisé par le fait

que chaque batterie, respectivement chaque groupe individuel de batteries raccordé électriquement, est connecté(e) à un circuit de courant distinct.

Fig.1

EP 0 275 874 B1